# EUROPEAN PATENT APPLICATION

(11) **EP 4 645 476 A1**
(43) Date of publication of application: **05.11.2025**
(21) Application number: 23931519.5
(22) Date of filing: 07.04.2023
(51) Int. Cl.: H01M 4/66

(54) **CURRENT COLLECTOR AND PREPARATION METHOD THEREFOR, SECONDARY BATTERY, AND ELECTRIC DEVICE**

(71) Applicant: Contemporary Amperex Technology Co., Limited, Ningde, Fujian 352100 (CN)
(72) Inventor: DONG, Miaomiao, Ningde, Fujian 352100 (CN); LIU, Huanji, Ningde, Fujian 352100 (CN); LI, Xuan, Ningde, Fujian 352100 (CN); SUN, Xin, Ningde, Fujian 352100 (CN); WU, Lili, Ningde, Fujian 352100 (CN); CHEN, Xingbu, Ningde, Fujian 352100 (CN); SONG, Peidong, Ningde, Fujian 352100 (CN)
(74) Representative: Ziebig Hengelhaupt Intellectual Property Attorneys Patentanwaltskanzlei PartGmbB
(86) International application number: PCT/CN2023/086975
(87) International publication number: WO 2024/207458

(57) **Abstract**

The present application provides a current collector, comprising a base layer, a first metal layer, and a second metal layer. The first metal layer is disposed on at least one surface of the base layer; the second metal layer is disposed on the surface of the first metal layer facing away from the base layer; the first metal layer comprises elemental iron or an iron alloy; the second metal layer comprises at least one of a metal layer formed by any one of copper, tin, lead, molybdenum, chromium and nickel, an elemental metal stack formed by any two or more of the elements, and an alloy layer formed by any two or more of the elements. Additionally, the present application relates to a corresponding preparation method for the current collector, and a secondary battery and an electric device. The current collector of the present application can enable the secondary battery to have a long service life.

## Description

### TECHNICAL FIELD

The present application relates to the technical field of battery materials, and in particular, to a current collector and a preparation method therefor, a secondary battery, and an electric device.

### BACKGROUND

In recent years, with the increasingly widespread application of secondary batteries, they have been extensively used in energy storage power systems such as hydropower, thermal power, wind power, and solar power stations, as well as in various fields such as electric tools, electric bicycles, electric motorcycles, electric vehicles, and aerospace.

As secondary batteries have achieved great development, higher requirements have been placed on their energy density and production cost. In the related art, the iron-nickel alloy foil formed by uniformly mixed iron and nickel is used as a current collector, and due to its light weight and low cost, the iron-nickel alloy foil has significant advantages in improving the energy density of the secondary battery and reducing the cost.

However, such secondary batteries using the iron-nickel alloy foil as the current collector will suffer problems such as battery impedance increase, performance attenuation, and internal short circuits after being used for a period of time, which will affect the service life of the secondary battery, and also limit the application of this type of current collector in the secondary battery.

Therefore, searching for a current collector that can enable the secondary battery to have a long service life is one of the key research directions that those skilled in the art focus on.

### SUMMARY

The present application is made in view of the above problems, and one objective thereof is to provide a current collector which can enable a secondary battery to have a long service life.

To achieve the above objective, a first aspect of the present application provides a current collector, including a substrate layer, a first metal layer, and a second metal layer, where the first metal layer is disposed on at least one surface of the substrate layer, the second metal layer is disposed on a surface of the first metal layer facing away from the substrate layer, and the first metal layer includes elemental iron or an iron alloy; the second metal layer includes at least one of a metal layer formed by any one of copper, tin, lead, molybdenum, chromium, and nickel, an elemental metal stacking layer formed by any two or more of the elements, and an alloy layer formed by any two or more of the elements. In this way, the first metal layer in the current collector including elemental iron or an iron alloy can enable the current collector to have higher strength; the second metal layer can prevent the iron in the first metal layer from being in direct contact with the electrolytic solution, thus effectively inhibiting the iron from being corroded by water, HF, and the like in the electrolytic solution, and ensuring the strength of the current collector, thereby effectively prolonging the service life of a secondary battery using an iron-containing current collector.

In any embodiment, the first metal layer is an iron metal layer, and the second metal layer is a nickel metal layer. Therefore, compared with the traditional copper foil current collector, the current collector using iron and nickel as metal layers has a lower material cost; and with the same thickness, the mass of the current collector using iron and nickel is smaller than that of the copper foil current collector, which can reduce the weight ratio of the current collector in the secondary battery, thus improving the energy density of the secondary battery.

In any embodiment, a plurality of first metal layers and a plurality of second metal layers are alternately disposed on a same side surface of the substrate layer, and an outermost layer of the current collector is the second metal layer. In this way, the elongation at break and the breaking strength of the current collector can be further improved under the condition that the content of each element in the current collector is the same.

In any embodiment, thicknesses of the plurality of first metal layers on the same side surface of the substrate layer are equal in a direction from the substrate layer toward the outermost layer.

In any embodiment, thicknesses of the plurality of first metal layers on the same side surface of the substrate layer sequentially decrease in a direction from the substrate layer toward the outermost layer. In this way, a gradient design of the thickness of the first metal layer can be formed, and the reduction of corrosion of iron in the first metal layer by water, HF, and the like in the electrolytic solution is further facilitated.

In any embodiment, the thicknesses of the plurality of first metal layers on the same side surface of the substrate layer sequentially decrease in the direction from the substrate layer toward the outermost layer, and a difference in thicknesses of any two adjacent first metal layers is 0.5 µm to 1.0 µm. That is, the thicknesses of the plurality of first metal layers on the same side surface of the substrate layer sequentially decrease at a difference of 0.5 µm to 1.0 µm in the direction from the substrate layer toward the outermost layer. In this way, the corrosion of iron by water, HF, and the like in the electrolytic solution can be reduced more effectively, and the corner breakage ratio of the electrode plate as well as the dissolution concentration of iron in the current collector are reduced.

In any embodiment, thicknesses of the plurality of second metal layers on the same side surface of the substrate layer are equal in a direction from the substrate layer toward the outermost layer.

In any embodiment, thicknesses of the plurality of second metal layers on the same side surface of the substrate layer sequentially increase in a direction from the substrate layer toward the outermost layer. In this way, a gradient design of the thickness of the second metal layer can be formed, and forming a thicker second metal layer on the outer layer of the current collector can further reduce the corrosion of iron in the first metal layer by water, HF, and the like in the electrolytic solution.

In any embodiment, the thicknesses of the plurality of second metal layers on the same side surface of the substrate layer sequentially increase in the direction from the substrate layer toward the outermost layer, and a difference in the thicknesses of any two adjacent second metal layers is 0.5 µm to 1.0 µm. That is, the thicknesses of the plurality of second metal layers on the same side surface of the substrate layer sequentially increase at a difference of 0.5 µm to 1.0 µm in the direction from the substrate layer toward the outermost layer. In this way, the corrosion of iron by water, HF, and the like in the electrolytic solution can be reduced more effectively, and the corner breakage ratio of the electrode plate as well as the dissolution concentration of iron in the current collector are reduced.

In any embodiment, the substrate layer includes elemental iron or an iron alloy. The substrate layer may function as a carrying layer for carrying the first metal layer and the second metal layer when preparing the current collector. The substrate layer using elemental iron or an iron alloy can also play a role in improving the strength of the current collector and reducing the cost.

In any embodiment, the substrate layer is made of a same material as the first metal layer, and the substrate layer is made of a different material from the second metal layer.

In any embodiment, the substrate layer is an iron metal layer.

In any embodiment, the first metal layer is an iron metal layer.

In any embodiment, the second metal layer is a nickel metal layer.

In any embodiment, the thickness of the substrate layer is 2 µm to 6 µm.

In any embodiment, the thickness of the substrate layer is 2 µm to 4 µm.

In any embodiment, the thickness of the current collector is 4 µm to 20 µm. In this way, the current collector can have higher mechanical strength, and the current collector will not be too thick or too heavy, thus facilitating the improvement of the energy density of the secondary battery.

In any embodiment, the thickness of the current collector is 6 µm to 9 µm.

In any embodiment, the thickness of the first metal layer is 0.5 µm to 16 µm.

In any embodiment, the thickness of the first metal layer is 0.5 µm to 1.5 µm.

In any embodiment, the thickness of the second metal layer is 0.5 µm to 16 µm. In this way, the second metal layer will not be too thin or too thick, thus ensuring that the iron in the first metal layer can be effectively prevented from corrosion, and facilitating the improvement of the energy density of the secondary battery.

In any embodiment, the thickness of the second metal layer is 0.5 µm to 1.5 µm.

A second aspect of the present application provides a method for preparing the current collector according to the first aspect of the present application. The method includes the following steps:
providing a substrate layer;
forming a first metal layer on a surface of the substrate layer; and
forming a second metal layer on the surface of the first metal layer facing away from the substrate layer;
where the first metal layer includes iron, and the second metal layer includes any one of copper, tin, lead, molybdenum, chromium, and nickel or an alloy formed by two or more of the elements.

In any embodiment, the first metal layer and the second metal layer are formed on the substrate layer by electroplating. Through the electroplating method, the current collector of the embodiments of the present application can be prepared easily and conveniently, and the thickness of each metal layer can be controlled by controlling the parameters of the electroplating process.

A third aspect of the present application provides a secondary battery. The second battery includes a positive electrode plate, a separator, a negative electrode plate, and an electrolyte, where the negative electrode plate includes a negative electrode current collector, a negative electrode active material is disposed on the negative electrode current collector, and the negative electrode current collector includes the current collector according to the first aspect of the present application. In this way, the secondary battery is less likely to suffer problems such as battery impedance increase, performance attenuation, and internal short circuits caused by corrosion of iron in the current collector by components in the electrolytic solution, and thus has a long service life.

In any embodiment, the mass fraction of the silicon-based material in the negative electrode active material is 25% to 100%. Therefore, the secondary battery adopts a high-silicon negative electrode plate. Since the negative electrode current collector of the secondary battery adopts the current collector according to the first aspect of the present application, the current collector can perform better in bearing frequent volume expansion and contraction of the high-silicon negative electrode plate, and problems such as current collector breaking and active material peeling off from the current collector are less likely to occur.

A fourth aspect of the present application provides an electric device, which includes the secondary battery according to the third aspect of the present application.

The first metal layer in the current collector of the present application includes elemental iron or an iron alloy, and the second metal layer includes at least one of a metal layer formed by any one of copper, tin, lead, molybdenum, chromium, and nickel, an elemental metal stacking layer formed by any two or more of the elements, and an alloy layer formed by any two or more of the elements; the first metal layer and the second metal layer are stacked together, and the second metal layer is disposed on a surface of the first metal layer facing away from the substrate layer. The first metal layer in the current collector including elemental iron or an iron alloy can enable the current collector to have higher strength; the second metal layer can prevent the iron in the first metal layer from being in direct contact with the electrolytic solution, which effectively inhibits the corrosion of iron by water, HF, and the like in the electrolytic solution, and ensures the strength of the current collector, thereby solving problems such as impedance increase, performance attenuation, and internal short circuits of the battery using a current collector made of an iron-nickel alloy foil to some extent, and effectively prolonging the service life of a secondary battery using an iron-containing current collector.

### BRIEF DESCRIPTION OF THE DRAWINGS

To better describe and illustrate embodiments and/or examples of the present application, reference may be made to one or more of the drawings. The additional details or examples used to describe the drawings should not be considered as limiting the scope of any one of the disclosed applications, the presently described embodiments and/or examples, and the best modes of the applications presently understood.
FIG 1 is a schematic structural diagram of a current collector according to one embodiment of the present application;
FIG. 2 is a schematic structural diagram of a current collector according to another embodiment of the present application;
FIG. 3 is a schematic structural diagram of a current collector according to another embodiment of the present application;
FIG. 4 is a schematic diagram of a secondary battery according to one embodiment of the present application;
FIG. 5 is an exploded view of the secondary battery according to one embodiment of the present application as shown in FIG. 4; and
FIG. 6 is a schematic diagram of an electric device using a secondary battery as a power source according to one embodiment of the present application.

Description of the reference numerals:
1. current collector; 11. substrate layer; 12. first metal layer; 13. second metal layer; 5. secondary battery; 51. housing; 52. electrode assembly; 53. cover plate; 6. electric device.

### DETAILED DESCRIPTION

Hereinafter, embodiments of the current collector and the preparation method therefor, the secondary battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it will be appreciated that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" represents an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

The weight described in the present specification may be a unit of weight known in the chemical industry field, such as µg, mg, g, kg, etc.

Currently, as secondary batteries have achieved great development, higher requirements have been placed on their energy density and production cost. To improve the energy density of the secondary battery and reduce the production cost, the iron-nickel alloy foil formed by uniformly mixed iron and nickel is used as an electrode current collector in the related art, and due to its light weight and low cost, the iron-nickel alloy foil has significant advantages in improving the energy density of the secondary battery and reducing the cost. However, since the electrode current collector needs to be in direct contact with the electrolytic solution, and Fe is prone to corrode due to its low potential, water, HF, and the like in the electrolytic solution will corrode the Fe in the current collector, thereby causing problems such as battery impedance increase, performance attenuation, and internal short circuits, which will affect the service life of the secondary battery, and limit the application of the type of electrode current collector in the secondary battery. In view of this, the inventors have found a current collector through research. The current collector has a structure with a first metal layer and a second metal layer stacking together and is made of a specific material. The current collector can not only improve the energy density of the secondary battery and reduce the production cost, but also inhibit the corrosion of Fe in the current collector by water, HF, and the like in the electrolytic solution, thereby enabling the secondary battery to have a long service life.

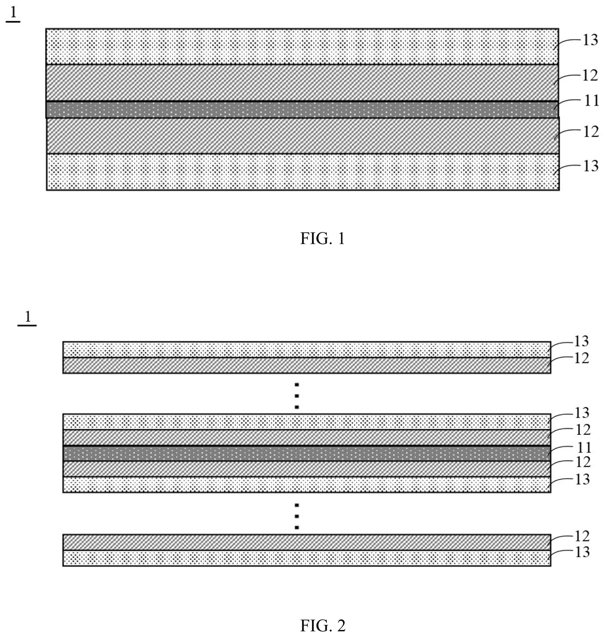

Referring to FIGs 1, 2, and 3, in some embodiments, a first aspect of the present application provides a current collector 1, which includes a substrate layer 11, a first metal layer 12, and a second metal layer 13, where the first metal layer 12 is disposed on at least one surface of the substrate layer 11, the second metal layer 13 is disposed on a surface of the first metal layer 12 facing away from the substrate layer 11, and the first metal layer 12 includes elemental iron or an iron alloy; the second metal layer 13 includes at least one of a metal layer formed by any one of copper, tin, lead, molybdenum, chromium, and nickel, an elemental metal stacking layer formed by any two or more of the elements, and an alloy layer formed by any two or more of the elements.

In the traditional electrode current collector made of an alloy foil with uniformly distributed iron and nickel elements, the positions of the iron element on the surface of the current collector are all weak points for corrosion, as the current collector needs to be in contact with the electrolytic solution in the secondary battery, and water, HF, and the like in the electrolytic solution have a corrosion effect on iron, the iron element on the surface of the current collector may react with water to generate inorganic substances and be deposited on the surface of the electrode plate when the iron-nickel alloy foil with uniformly distributed elements is applied in the secondary battery and the battery is going through cycling and storing, particularly at a high temperature, such that the impedance of the battery increases and other side reactions occur. In addition, the iron element on the surface of the current collector may also react with HF to cause the iron to be dissolved and deposited, which may also lead to the increase in impedance of the battery, and finally affect the performance of the battery.

The chemical formulas of the reaction of the iron in the current collector 1 with water, oxygen, and HF in the electrolytic solution are shown in the following chemical formulas 1, 2, and 3, respectively:

Chemical formula 1: 3Fe + 4H₂O = Fe₃O₄ + 4H₂↑ (at a high temperature);

Chemical formula 2: 4Fe + 3O₂ + 2nH₂O = 2(Fe₂O₃ × nH₂O) (at room temperature and in the presence of O₂ in the electrolytic solution)

; and

Chemical formula 3: Fe + 2HF = FeF₂ + H₂.

The first metal layer 12 in the current collector 1 according to the embodiments of the present application includes elemental iron or an iron alloy. The second metal layer 13 includes at least one of a metal layer formed by any one of copper, tin, lead, molybdenum, chromium, and nickel, an elemental metal stacking layer formed by any two or more of the elements, and an alloy layer formed by any two or more of the elements. The first metal layer 12 and the second metal layer 13 are stacked together, and the second metal layer 13 is disposed on a surface of the first metal layer 12 facing away from the substrate layer 11. In the current collector 1 according to the embodiments of the present application, the first metal layer 12 including elemental iron or an iron alloy can enable the current collector 1 to have higher strength; the second metal layer 13 can prevent the iron in the first metal layer 12 from being in direct contact with the electrolytic solution, which effectively inhibits the iron from being corroded by water, HF, and the like in the electrolytic solution, and ensures the strength of the current collector 1, thereby solving problems such as battery impedance increase, performance attenuation, and internal short circuits to some extent, and effectively prolonging the service life of a secondary battery using an iron-containing current collector.

It can be understood that the second metal layer 13 may be an elemental metal layer formed by any one of copper, tin, lead, molybdenum, chromium, and nickel, an elemental metal stacking layer formed by any two or more of the elements of copper, tin, lead, molybdenum, chromium, and nickel, or an alloy layer formed by any two or more of the elements of copper, tin, lead, molybdenum, chromium, and nickel. It can be understood that the elemental metal stacking layer formed by two or more of the elements refers to a metal stacking layer formed by stacking an elemental metal layer of one element onto an elemental metal layer of other elements.

In some embodiments, the first metal layer 12 is an iron metal layer, and the second metal layer 13 is a nickel metal layer. In this way, compared with the traditional copper foil current collector, the current collector 1 using the iron metal layer and the nickel metal layer has a lower material cost, which can reduce the production cost of the secondary battery. In addition, under the same thickness, the mass of the current collector 1 using iron and nickel is smaller than that of the copper foil current collector, which can reduce the weight ratio of the current collector 1 in the secondary battery, thus improving the energy density of the secondary battery.

In the traditional art, a copper foil is generally used as a negative electrode current collector of a secondary battery, and the elongation at break of the copper foil current collector is generally 3% to 5%, and its breaking strength is generally 300 MPa to 500 MPa. In a secondary battery with high energy density, a silicon-based material in a negative electrode active material accounts for 25% to 100% of the total weight of the active substance. The volume change of silicon in the lithium intercalation is 120% to 300%. A huge volume change will cause a film to extend along the three-dimensional direction, which will present a great test for the elongation at break and breaking strength of the negative electrode current collector. If the performance of the negative electrode current collector is insufficient, there may be problems such as negative electrode active material peeling off from the current collector and current collector breaking, thus leading to a sharp decline in battery performance, and such problems will be more serious as the content of the silicon-based material in the negative electrode active material increases. In the embodiments of the present application, the iron metal is used as the first metal layer 12. Due to its high strength, the elongation at break and breaking strength of the current collector 1 can be improved, thereby enabling the current collector 1 to have high mechanical strength. Particularly when the current collector 1 is used as a high-silicon negative electrode current collector, compared with a copper foil, the current collector can perform better in bearing frequent volume expansion and contraction of the electrode plate due to lithium intercalation and deintercalation of silicon during the charging and discharging processes, thereby reducing the probability that the current collector 1 breaks and the film peels off from the current collector 1.

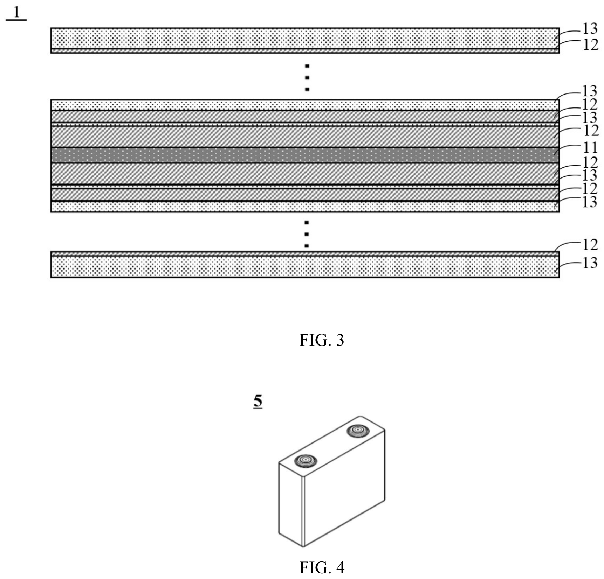

Referring to FIGs. 2 and 3, in some embodiments, a plurality of first metal layers 12 and a plurality of second metal layers 13 are alternately disposed on a same side surface of the substrate layer 11, and an outermost layer of the current collector 1 is the second metal layer 13. In this way, a current collector 1 with a plurality of first metal layers 12 and a plurality of second metal layers 13 alternately stacked on the surface of the substrate layer 11 may be formed, such that the elongation at break and breaking strength of the current collector 1 can be further improved under the condition that the content of each element in the current collector 1 is the same.

It should be noted that the number of layers of the first metal layer 12 and the second metal layer 13 on the same side surface of the substrate layer 11 may be set according to actual needs. However, the number of layers of the first metal layer 12 and the second metal layer 13 should not be too large. If there is a large number of layers of the first metal layer 12 and the second metal layer 13, the process flow of preparation will be increased. Generally, the first metal layer 12 and the second metal layer 13 on the same side surface of the substrate layer 11 may each have 1 to 4 layers.

Referring to FIG. 2, in some embodiments, thicknesses of the plurality of first metal layers 12 on the same side surface of the substrate layer 11 are equal in a direction from the substrate layer 11 toward the outermost layer. In some embodiments, thicknesses of the plurality of second metal layers 13 on the same side surface of the substrate layer 11 are equal in a direction from the substrate layer 11 toward the outermost layer. That is, each first metal layer 12 and each second metal layer 13 in the current collector 1 are set in an equal thickness.

Referring to FIG. 3, in some embodiments, thicknesses of the plurality of first metal layers 12 on the same side surface of the substrate layer 11 sequentially decrease in a direction from the substrate layer 11 toward the outermost layer. That is, the thickness of each first metal layer 12 gradually decreases in the direction from the substrate layer 11 toward the outermost layer. With such an arrangement, the thickness of the first metal layer 12 proximal to the inner layer of the current collector 1 is larger, and the thickness of the first metal layer 12 proximal to the outer layer of the current collector 1 is smaller, thus giving a form to a gradient design of the thickness of the first metal layer 12 and further facilitating the reduction of corrosion of iron by water, HF, and the like in the electrolytic solution.

In some embodiments, the thicknesses of the plurality of first metal layers 12 on the same side surface of the substrate layer 11 sequentially decreasing in the direction from the substrate layer 11 toward the outermost layer satisfies that the difference in thicknesses of any two adjacent first metal layers 12 is 0.5 µm to 1.0 µm. That is, in the direction from the substrate layer 11 toward the outermost layer, the thickness of the first metal layer 12 at an inner layer is 0.5 µm to 1.0 µm greater than the thickness of the first metal layer 12 at an outer layer that is adjacent to the inner layer. In this way, the corrosion of iron by water, HF, and the like in the electrolytic solution can be reduced more effectively, and the corner breakage ratio of the electrode plate as well as the dissolution concentration of iron in the current collector 1 are reduced.

It can be understood that the meaning of "two adjacent layers" does not refer to that the two layers are physically in contact with each other, but that they are in adjacent positions among the plurality of first metal layers 12 arranged on the same side surface of the substrate layer 11 according to the above direction. It can be understood that the difference among the sequentially decreasing thicknesses of the first metal layers 12 may be, but is not limited to, 0.5 µm, 0.6 µm, 0.7 µm, 0.8 µm, 0.9 µm, and 1.0 µm.

In some embodiments, thicknesses of the plurality of second metal layers 13 on the same side surface of the substrate layer 11 sequentially increase in a direction from the substrate layer 11 toward the outermost layer. That is, the thicknesses of the respective second metal layers 13 gradually increase in the direction from the substrate layer 11 toward the outermost layer. With such an arrangement, the thickness of the second metal layer 13 proximal to the outer layer of the current collector 1 is larger, and the thickness of the second metal layer 13 proximal to the inner layer of the current collector 1 is smaller, thus giving a form to a gradient design of the thickness of the second metal layer 13, and forming a thicker second metal layer 13 on the outer layer of the current collector 1 can further reduce the corrosion of iron by water, HF, and the like in the electrolytic solution.

In some embodiments, the thicknesses of the plurality of second metal layers 13 on the same side surface of the substrate layer 11 sequentially increasing in the direction from the substrate layer 11 toward the outermost layer satisfies that the difference in the thicknesses of any two adjacent second metal layers 13 is 0.5 µm to 1.0 µm. That is, in the direction from the substrate layer 11 toward the outermost layer, the thickness of the second metal layer 13 at an inner layer is 0.5 µm to 1.0 µm smaller than the thickness of the second metal layer 13 at an outer layer that is adjacent to the inner layer. In this way, the corrosion of iron by water, HF, and the like in the electrolytic solution can be reduced more effectively, and the corner breakage ratio of the electrode plate as well as the dissolution concentration of iron in the current collector 1 are reduced.

It can be understood that the meaning of "two adjacent layers" does not refer to that the two layers are physically in contact with each other, but that they are in adjacent positions among the plurality of second metal layers 13 arranged on the same side surface of the substrate layer 11 according to the above direction. It can be understood that the difference among the sequentially increasing thicknesses of the second metal layers 13 may be, but is not limited to, 0.5 µm, 0.6 µm, 0.7 µm, 0.8 µm, 0.9 µm, and 1.0 µm.

In some embodiments, the material of the substrate layer 11 is elemental iron, that is, the substrate layer 11 is an iron metal layer, and the thickness of the substrate layer 11 is 2 µm to 6 µm. The substrate layer 11 is used as a carrying layer for electroplating when preparing the first metal layer 12 and the second metal layer 13. The substrate layer 11 should not be too thick, or the weight of the current collector 1 will increase. In addition, the substrate layer 11 using the iron metal layer can also improve the strength of the current collector 1 and reduce the cost.

In some embodiments, the thickness of the current collector 1 is 4 µm to 20 µm. It can be understood that the thickness of the current collector 1 includes the thicknesses of each first metal layer 12 and each second metal layer 13 described above and the thickness of the substrate layer 11. The current collector 1 should not be too thin or too thick. Too thin will reduce the mechanical strength of the current collector 1, and too thick will increase the volume and weight of the current collector 1. It can be understood that the thickness of the current collector 1 may be, but is not limited to, 4 µm, 6 µm, 8 µm, 10 µm, 12 µm, 15 µm, 18 µm, and 20 µm.

In any embodiment, the thickness of the current collector 1 is 6 µm to 9 µm.

In some embodiments, the thickness of the first metal layer 12 is 0.5 µm to 16 µm. That is, the thickness of each first metal layer 12 is within the range of 0.5 µm to 16 µm. It can be understood that the thickness of the first metal layer 12 may be, but is not limited to, 0.5 µm, 1.0 µm, 2.0 µm, 3.0 µm, 4.0 µm, 5.0 µm, 6.0 µm, 7.0 µm, 8.0 µm, 9.0 µm, 10.0 µm, 11.0 µm, 12.0 µm, 13.0 µm, 14.0 µm, 15.0 µm, and 16.0 µm.

In any embodiment, the thickness of the first metal layer 12 is 0.5 µm to 1.5 µm.

In some embodiments, the thickness of the second metal layer 13 is 0.5 µm to 16 µm. That is, the thickness of each second metal layer 13 is within the range of 0.5 µm to 16 µm. The thickness of the second metal layer 13 should not be too thin or too thick. Too thin will reduce its anti-corrosion effect on iron, and too thick will increase the volume and weight of the current collector 1. It can be understood that the thickness of the second metal layer 13 may be, but is not limited to, 0.5 µm, 1.0 µm, 2.0 µm, 3.0 µm, 4.0 µm, 5.0 µm, 6.0 µm, 7.0 µm, 8.0 µm, 9.0 µm, 10.0 µm, 11.0 µm, 12.0 µm, 13.0 µm, 14.0 µm, 15.0 µm, and 16.0 µm.

In any embodiment, the thickness of the second metal layer 13 is 0.5 µm to 1.5 µm.

In some embodiments, a second aspect of the present application provides a method for preparing the current collector 1 according to the first aspect of the present application. The method includes the following steps: providing a substrate layer 11; forming a first metal layer 12 on a surface of the substrate layer 11; and forming a second metal layer 13 on a surface of the first metal layer 12 facing away from the substrate layer 11. The first metal layer 12 includes elemental iron or an iron alloy, and the second metal layer 13 includes at least one of a metal layer formed by any one of copper, tin, lead, molybdenum, chromium, and nickel, an elemental metal stacking layer formed by two or more of the elements, and an alloy layer formed by two or more of the elements.

In some embodiments, the first metal layer 12 and the second metal layer 13 are formed on the substrate layer 11 by electroplating. Through the electroplating method, the current collector according to the first aspect of the present application can be prepared easily and conveniently. In addition, the thickness of each metal layer can be controlled conveniently by controlling the parameters of the electroplating process. It can be understood that the method of forming the first metal layer 12 and the second metal layer 13 on the substrate layer 11 in the present application is not limited to the electroplating method, and other existing methods such as sputtering may also be used to form the first metal layer 12 and the second metal layer 13.

In some embodiments, after the second metal layer 13 is formed, the first metal layer 12 and the second metal layer 13 may be sequentially formed on the outer side of the second metal layer 13 again. In this way, a current collector in which a plurality of first metal layers 12 and a plurality of second metal layers 13 are alternately stacked may be formed. In addition, the thickness of each first metal layer 12 and the thickness of each second metal layer 13 may have a gradient change by controlling the parameters of the electroplating process. The number of layers of the first metal layer 12 and the second metal layer 13 may be controlled by the number of times of the alternate electroplating.

In some embodiments, a third aspect of the present application provides a secondary battery. The secondary battery includes a positive electrode plate, a separator, a negative electrode plate, and an electrolyte. The negative electrode plate includes a negative electrode current collector and a negative electrode active material disposed on the negative electrode current collector. The negative electrode current collector adopts the current collector according to the first aspect of the present application. In this way, the secondary battery is less likely to suffer problems such as battery impedance increase, performance attenuation, and internal short circuits caused by corrosion of iron in the current collector by components in the electrolytic solution, and thus has a long service life.

In some embodiments, the mass fraction of the silicon-based material in the negative electrode active material on the negative electrode plate is 25% to 100%. In a secondary battery with high energy density, the negative electrode plate generally contains a silicon-based material which accounts for a large proportion of the total mass of the negative electrode active material. During the lithium intercalation process, the volume of silicon will have a great change, resulting in the negative electrode active material layer extending along the three-dimensional direction. In addition, problems such as the negative electrode active material peeling off from the negative electrode current collector and negative electrode current collector breaking are easy to occur, leading to a sharp decline in battery performance, and such problems will be more serious as the content of the silicon-based material in the negative electrode material increases. The secondary battery of the present application adopts the current collector according to the first aspect of the present application. Compared with the traditional copper foil current collector, the current collector has a higher elongation at break and breaking strength. When the current collector is used as a negative electrode current collector of a high-silicon secondary battery, the current collector can perform better in bearing frequent volume expansion and contraction, and problems such as current collector breaking and active material peeling off from the current collector are less likely to occur.

It can be understood that the silicon-based material may be selected from at least one of elemental silicon, a silicon-oxygen compound, a silicon-carbon composite, a silicon-nitrogen composite, and a silicon alloy, and the mass fraction of the silicon-based material in the negative electrode active material on the negative electrode plate may be, but is not limited to, 25%, 28%, 30%, 32%, 35%, 38%, 40%, 42%, 45%, 48%, 50%, 52%, 55%, 58%, 60%, 62%, 65%, 68%, 70%, 72%, 75%, 78%, 80%, 82%, 85%, 88%, 90%, 92%, 95%, 98%, and 100%.

In some embodiments, a fourth aspect of the present application further provides an electric device. The electric device includes the secondary battery according to the third aspect of the present application.

Hereinafter, the secondary battery and the electric device of the present application are described with appropriate reference to the drawings.

Unless otherwise specified, the components, the material type, or the content of the battery mentioned apply to both the lithium-ion secondary battery and the sodium-ion secondary battery.

In one embodiment of the present application, provided is a secondary battery.

Typically, the secondary battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to primarily prevent the positive and negative electrodes from short-circuiting, while allowing the passage of ions.

### [Positive Electrode Plate]

The positive electrode plate includes a positive electrode current collector and a positive electrode film layer disposed on at least one surface of the positive electrode current collector.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector may be formed by forming a metal material on a polymer material substrate. The metal material includes, but is not limited to, aluminum, an aluminum alloy, nickel, a nickel alloy, titanium, a titanium alloy, silver, a silver alloy, or the like. The polymer material substrate (such as polypropylene (PP), polyethylene terephthalate (PET), polybutylene terephthalate (PBT), polystyrene (PS), and polyethylene (PE))

In some embodiments, a positive electrode active material for use in batteries known in the art may be used as the positive electrode active material.

As an example, a positive electrode active material for a lithium-ion secondary battery may include at least one of the following materials: a lithium-containing phosphate with an olivine structure, a lithium transition metal oxide, and their respective modified compounds. However, the present application is not limited to these materials, and other traditional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi₁ₗ₃Co₁ₗ₃Mn₁ₗ₃O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

As an example, a positive electrode active material for a sodium-ion secondary battery may include at least one of the following materials: at least one of a sodium transition metal oxide, a polyanionic compound, and a Prussian blue compound. However, the present application is not limited to these materials, and other traditional and known materials that can be used as positive electrode active materials for sodium-ion batteries may also be used.

As an optional technical solution of the present application, in the sodium transition metal oxide, the transition metal may be at least one of Mn, Fe, Ni, Co, Cr, Cu, Ti, Zn, V, Zr, and Ce. The sodium transition metal oxide is, for example, NaₓMO₂, where M is one or more of Ti, V, Mn, Co, Ni, Fe, Cr, and Cu, and 0 < x ≤ 1.

As an optional technical solution of the present application, the polyanionic compound may be a class of compounds having sodium ions, transition metal ions, and tetrahedral (YO₄)ⁿ⁻ anion units. The transition metal may be at least one of Mn, Fe, Ni, Co, Cr, Cu, Ti, Zn, V, Zr, and Ce; Y may be at least one of P, S, and Si; and n represents the valence state of (YO₄)ⁿ⁻.

The polyanionic compound may also be a class of compounds having sodium ions, transition metal ions, tetrahedral (YO₄)ⁿ⁻ anion units, and halogen anions. The transition metal may be at least one of Mn, Fe, Ni, Co, Cr, Cu, Ti, Zn, V, Zr, and Ce; Y may be at least one of P, S, and Si, and n represents the valence state of (YO₄)ⁿ⁻; and the halogen may be at least one of F, Cl, and Br.

The polyanionic compound may also be a class of compounds having sodium ions, tetrahedral (YO₄)ⁿ⁻ anion units, polyhedral units (ZO_{y})^{m+}, and optionally halogen anions. Y may be at least one of P, S, and Si, and n represents the valence state of (YO₄)ⁿ⁻; Z represents a transition metal, which may be at least one of Mn, Fe, Ni, Co, Cr, Cu, Ti, Zn, V, Zr, and Ce, and m represents the valence state of (ZO_{y})^{m+}; and the halogen may be at least one of F, Cl, and Br.

The polyanionic compound is at least one of NaFePO₄, Na₃V₂(PO4)₃ (sodium vanadium phosphate, referred to as NVP), Na₄Fe₃(PO₄)₂(P₂O₇), NaM'PO4F (M' is one or more of V, Fe, Mn, and Ni), and Na₃(VO_{y})₂(PO₄)₂F_{3-2y} (0 ≤ y ≤ 1).

The Prussian blue compound may be a class of compounds having sodium ions, transition metal ions, and cyanide ions (CN⁻). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0 < a ≤ 2, 0 < b < 1, and 0 < c < 1.

The weight ratio of the positive electrode active material in the positive electrode film layer is 80 wt% to 100 wt%, based on the total weight of the positive electrode film layer.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin. The weight ratio of the binder in the positive electrode film layer is 0 wt% to 20 wt%, based on the total weight of the positive electrode film layer.

In some embodiments, the positive electrode film layer further optionally includes a conductive agent. As an example, the conductive agent may include at least one of superconducting carbon, acetylene black, carbon black, Ketjen black, a carbon dot, a carbon nanotube, a graphene, and a carbon nanofiber. The weight ratio of the conductive agent in the positive electrode film layer is 0 wt% to 20 wt%, based on the total weight of the positive electrode film layer.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry, where the solid content of the positive electrode slurry is 40 wt% to 80 wt%, and the viscosity at room temperature is adjusted to 5000 mPa s to 25000 mPa s, coating the surface of the positive electrode current collector with the positive electrode slurry and performing drying, and then after the drying, performing cold pressing through a cold rolling mill, such that the positive electrode plate is formed, where the areal density of the positive electrode powder coating is 25 mg/cm² to 45 mg/cm², and the compaction density of the positive electrode plate is 3.0 g/cm³ to 3.6 g/cm³, optionally 3.3 g/cm³ to 3.5 g/cm³.

The calculation formula of the compaction density is as follows: compaction density = coating areal density/(electrode plate thickness after extrusion - current collector thickness).

The mass M of the positive electrode active substance per unit area of the positive electrode film can be weighed out using a standard balance.

The thickness T of the positive electrode film can be measured using a micrometer, for example, using a micrometer with Model Mitutoyo 293-100 and a precision of 0.1 µm. It should be noted that the thickness of the positive electrode film described in the present application refers to the thickness of the positive electrode film which is compacted by cold pressing and used for assembling the positive electrode plate of the battery.

### [Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, the negative electrode current collector adopts the current collector according to the first aspect of the present application.

In some embodiments, a negative electrode active material for use in batteries known in the art may be used as the negative electrode active material.

As an example, the negative electrode active material of lithium-ion secondary batteries may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other traditional materials that can be used as negative electrode active materials for batteries may also be used. These negative electrode active materials may be used alone or in combination of two or more.

As an example, the negative electrode active material of sodium-ion secondary batteries is generally a hard carbon material, two-dimensional metal carbide, or nitride. Preferably, the negative electrode active material of sodium-ion secondary batteries is generally a hard carbon material.

The weight ratio of the negative electrode active material in the negative electrode film layer is 70 wt% to 99 wt%, based on the total weight of the negative electrode film layer.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The weight ratio of the binder in the negative electrode film layer is 0 wt% to 30 wt%, based on the total weight of the negative electrode film layer.

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber. The weight ratio of the conductive agent in the negative electrode film layer is 0 wt% to 20 wt%, based on the total weight of the negative electrode film layer.

In some embodiments, the negative electrode film layer further optionally includes other auxiliary agents, such as a thickener (e.g., sodium carboxymethylcellulose (CMC-Na)). The weight ratio of other auxiliary agents in the negative electrode film layer is 0 wt% to 15 wt%, based on the total weight of the negative electrode film layer.

In some embodiments, the negative electrode plate can be prepared in the following manner: dispersing the components for preparing the negative electrode plate, such as the negative electrode active material, the conductive agent, the binder, and any other components, in a solvent (such as deionized water) to form a negative electrode slurry, where the solid content of the negative electrode slurry is 30 wt% to 70 wt%, and the viscosity at room temperature is adjusted to 2000 mPa s to 10000 mPa s; coating the negative electrode current collector with the obtained negative electrode slurry, and performing a drying process and cold pressing (for example, using twin rollers) to obtain a negative electrode plate. The areal density of the negative electrode powder coating is 6 mg/m² to 13 mg/m², and the compaction density of the negative electrode plate is 1.2 g/m³ to 2.0 g/m³.

The mass M of the negative electrode active substance per unit area of the negative electrode film can be weighed out using a standard balance.

The thickness T of the negative electrode film can be measured using a micrometer, for example, using a micrometer with Model Mitutoyo 293-100 and a precision of 0.1 µm. It should be noted that the thickness of the negative electrode film in the present application refers to the thickness of the negative electrode film which is compacted by cold pressing and used for assembling the negative electrode plate of the battery.

### [Electrolyte]

The electrolyte conducts ions between the positive electrode plate and the negative electrode plate. The present application does not particularly limit the type of the electrolyte, and a choice can be made as needed. For example, the electrolyte may be liquid, gel, or all solid.

In some embodiments, the electrolyte is an electrolytic solution. The electrolytic solution includes an electrolyte salt and a solvent.

In some embodiments, the electrolyte salt of lithium-ion secondary batteries may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluorobis(oxalato)phosphate (LiDFOP), and lithium tetrafluoro(oxalato)phosphate (LiTFOP).

The electrolyte salt of sodium-ion secondary batteries may be selected from one or more of sodium hexafluorophosphate, sodium bis(fluorosulfonyl)imide, sodium bis(trifluoromethanesulfonyl)imide, sodium trifluoromethanesulfonate, sodium tetrafluoroborate, sodium difluorophosphate, sodium perchlorate, and sodium chloride.

The concentration of the electrolyte salt is typically 0.5 mol/L to 5 mol/L.

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery, and an additive for improving the high- or low-temperature performance of the battery.

### [Separator]

In some embodiments, the secondary battery further includes a separator. The present application does not particularly limit the type of the separator, and any porous-structure separator known to have good chemical stability and mechanical stability may be selected and used.

In some embodiments, the separator may be made of a material selected from at least one of glass fiber, non-woven fabric, polyethylene, polypropylene, and polyvinylidene difluoride. The separator may be a single-layer film or a multi-layer composite film, and there is no particular limitation on this. When the separator is a multi-layer composite film, the materials of the layers may be the same or different, and there is no particular limitation on this.

In some embodiments, the thickness of the separator is 6 µm to 40 µm, and optionally 12 µm to 20 µm.

In some embodiments, the positive electrode plate, the negative electrode plate, and the separator may be manufactured into an electrode assembly through a winding process or a stacking process.

In some embodiments, the secondary battery may include an outer packaging. The outer packaging can be used for packaging the electrode assembly and the electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

The present application does not particularly limit the shape of the secondary battery, and it may have a cylindrical shape, a prismatic shape, or any other shape. For example, FIG. 4 shows a secondary battery 5 having a prismatic structure as one example.

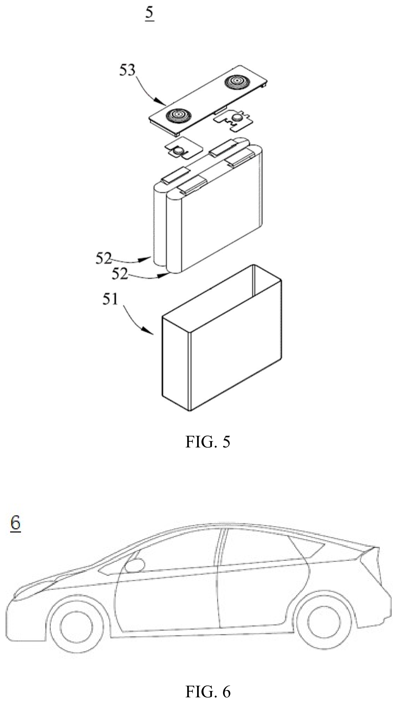

In some embodiments, referring to FIG. 5, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assemblies 52 included in the secondary battery 5 may be one or more, and those skilled in the art can select the number according to specific and actual needs.

In some embodiments, the secondary battery 5 may be assembled into a battery module. The number of secondary batteries 5 included in the battery module may be one or more, and the specific number may be selected by those skilled in the art based on the use and capacity of the battery module.

In the battery module, a plurality of secondary batteries 5 may be sequentially arranged in a length direction of the battery module. Certainly, the arrangement may also be in any other manner. Further, the plurality of secondary batteries 5 may be fixed by fasteners.

Optionally, the battery module may further include a shell having an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

The battery pack may include a battery case and a plurality of battery modules arranged in the battery case. The battery case includes an upper case body and a lower case body. The upper case body is capable of lidding the lower case body to form a closed space for accommodating the battery modules. The plurality of battery modules may be arranged in any manner in the battery case.

In addition, the present application further provides an electric device. The electric device includes at least one of the secondary battery, the battery module, or the battery pack according to the present application. The secondary battery, the battery module, or the battery pack can be used as a power source for the electric device, and they can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its use requirements.

FIG. 6 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

As another example, the device may be a mobile phone, a tablet computer, a laptop computer, or the like. The device is generally required to be light and thin, and a secondary battery can thus be used as a power source.

Some embodiments are as follows.

In order to make the technical problems, the technical solutions, and the beneficial effects of the present application more apparent, the present application is further described in detail below with reference to the embodiments and drawings. Apparently, the described embodiments are merely some embodiments of the present application, rather than all of the embodiments. The following description of at least one exemplary embodiment is merely illustrative and is in no way intended to limit the present application or its applications. Based on the embodiments in the present application, all other embodiments obtained by those of ordinary skill in the art without creative work shall fall within the protection scope of the present application.

The examples without techniques or conditions specified therein are implemented according to techniques or conditions described in the literature in the art or according to product instructions. Reagents or instruments used herein without specified manufacturers are all commercially available conventional products.

### I. Preparative Examples

### 1. Preparation of current collector

### Preparative Example 1

The substrate layer was used as a carrying layer, and Fe layers were first electroplated on the surface of the substrate layer multiple times, and then Ni layers were electroplated thereon multiple times, such that a current collector was obtained. In the direction from the outer layer to the inner layer of the current collector, the Ni metal layer and the Fe metal layer were sequentially arranged on the same side surface of the substrate layer. The substrate layer is a 2-µm thick iron metal layer, and the thicknesses of the Ni metal layer and the Fe metal layer are shown in Table 1.

### Preparative Example 2

The preparation method of this example is substantially the same as that of Preparative Example 1, except that the thickness of the Ni layer is different from that of the Fe layer. The thicknesses of the Ni metal layer and the Fe metal layer in this preparative example are shown in Table 1.

### Preparative Example 3

The preparation method of this example is substantially the same as that of Preparative Example 1, except that the thickness of the Ni layer is different from that of the Fe layer. The thicknesses of the Ni metal layer and the Fe metal layer in this preparative example are shown in Table 1.

### Preparative Example 4

The substrate layer was used as a carrying layer, and Fe layers and Ni-Cr alloy layers were sequentially electroplated on the surface of the substrate layer multiple times, such that a current collector was obtained. In the direction from the outer layer to the inner layer of the current collector, the Ni-Cr alloy layer and the Fe metal layer were sequentially arranged on the same side surface of the substrate layer. The substrate layer is the same as that of Preparative Example 1, and the thicknesses of each Ni-Cr alloy layer and each Fe metal layer are shown in Table 1.

### Preparative Example 5

The substrate layer was used as a carrying layer, and Fe layers were first electroplated on the surface of the substrate layer multiple times, and then Mo layers were electroplated thereon multiple times, such that a current collector was obtained. In the direction from the outer layer to the inner layer of the current collector, the Mo metal layer and the Fe metal layer were sequentially arranged on the same side surface of the substrate layer. The substrate layer is the same as that of Preparative Example 1, and the thicknesses of the Mo metal layer and the Fe metal layer are shown in Table 1.

### Preparative Example 6

The preparation method of this example is substantially the same as that of Preparative Example 5, except that the Mo metal layer was changed to a Cr metal layer. The thicknesses of the Cr metal layer and the Fe metal layer in this preparative example are shown in Table 1.

### Preparative Example 7

The preparation method of this example is substantially the same as that of Preparative Example 1, except that the thicknesses of the Ni metal layer and the Fe metal layer are different from that of the substrate layer. The thicknesses of the Ni metal layer, the Fe metal layer, and the substrate layer in this preparative example are shown in Table 1.

### Preparative Example 8

The substrate layer was used as a carrying layer, and Fe layers, Ni layers, Fe layers, and Ni layers were sequentially electroplated on the surface of the substrate layer multiple times, such that a current collector was obtained. In the direction from the outer layer to the inner layer of the current collector, the Ni metal layer, the Fe metal layer, the Ni metal layer, and the Fe metal layer were sequentially arranged on the same side surface of the substrate layer. The substrate layer is the same as that of Preparative Example 1, and the thicknesses of each Ni metal layer and each Fe metal layer are shown in Table 1.

### Preparative Example 9

The preparation method of this example is substantially the same as that of Preparative Example 8, except that the thickness of the Fe metal layer is different from that of the substrate layer. The thicknesses of the Fe metal layer and the substrate layer in this preparative example are shown in Table 1.

### Preparative Comparative Example 1

A copper foil was used as a current collector, and the thickness of the copper foil was 6 µm.

### Preparative Comparative Example 2

An iron-nickel alloy foil formed by uniformly mixing Ni and Fe was used as a current collector, and the thickness of the iron-nickel alloy foil was 6 µm.

### 2. Current collector performance test

### Breaking strength and elongation at break tests

The current collector was cut into a rectangular sample of 100 mm × 15 mm by using a die cutter, and then a stretching experiment was performed by using a stretching machine at a stretching speed of 2 mm/min until the rectangular sample was broken. The tensile strength of the sample at the time of breaking is the breaking strength, and the elongation at break = the length L₁ at the time of breaking/the initial length L₀ of the sample - 1. Test data of the breaking strength and the elongation at break of the current collectors of the preparative examples and preparative comparative examples are shown in Table 1.

**Table 1**

| Experimental plan | Current collector structure | | | Current collector performance | |
|---|---|---|---|---|---|
| | Element of each layer of current collector | Outer → inner → outer: Thickness of each layer/µm | Thickness of current collector/µm | Elongation% | Tensile strength (MPa) |
| Preparative Example 1 | Ni/Fe/substrate layer/Fe/Ni | 1+1+2+1+1 | 6 | 2.2 | 1056 |
| Preparative Example 2 | Ni/Fe/substrate layer/Fe/Ni | 0.5+1.5+2+1.5+0.5 | 6 | 2.0 | 1078 |
| Preparative Example 3 | Ni/Fe/substrate layer/Fe/Ni | 0.5+0.5+2+0.5+0.5 | 4 | 4.1 | 987 |
| Preparative Example 4 | Ni+Cr/Fe/substrate layer/Fe/Ni+Cr | 1.5+0.5+2+0.5+1.5 | 6 | 2.5 | 1066 |
| Preparative Example 5 | Mo/Fe/substrate layer/Fe/Mo | 0.5+1.5+2+1.5+0.5 | 6 | 2.0 | 1169 |
| Preparative Example 6 | Cr/Fe/substrate layer/Fe/Cr | 0.5+1.5+2+1.5+0.5 | 6 | 1.8 | 1201 |
| Preparative Example 7 | Ni/Fe/substrate layer/Fe/Ni | 0.5+0.5+4+0.5+0.5 | 6 | 2.1 | 1080 |
| Preparative Example 8 | Ni/Fe/Ni/Fe/substrate layer/Fe/Ni/Fe/Ni | 1+0.5+0.5+1+3+1+0.5+0.5+1 | 9 | 1.2 | 1324 |
| Preparative Example 9 | Ni/Fe/Ni/Fe/substrate layer/Fe/Ni/Fe/Ni | 1+0.5+0.5+1.5+2+1.5+0.5+0.5+1 | 9 | 1.1 | 1389 |
| Preparative Comparative Example 1 | Copper foil | / | 6 | 4.2 | 354 |
| Preparative Comparative Example 2 | Nickel-iron alloy foil | / | 6 | 2.2 | 1051 |

From Table 1, it can be seen that the copper foil has a high elongation at break but low breaking strength; the nickel-iron alloy foil has a higher elongation at break and breaking strength than the copper foil, but iron is prone to dissolving. Compared with Preparative Comparative Example 2, Preparative Example 1 only replaces the nickel-iron alloy foil with the stacked Ni metal layer and Fe metal layer, and the breaking strength of the current collector of Preparative Example 1 is slightly improved due to the alternate arrangement of elements between layers.

Compared with Preparative Example 1, in Preparative Example 2, the content of Ni decreases, and the content of Fe increases. The elongation at break of the current collector is slightly reduced, but the breaking strength is improved. In Preparative Example 3, the thickness of the current collector is reduced, and since the current collector is thin and prone to stretch, its elongation at break is large, but its breaking strength is deteriorated.

In Preparative Examples 5 and 6, Mo and Cr are used to replace Ni; the elongation of the current collector is reduced, but its strength is improved. In Preparative Examples 8 and 9, the thickness of the current collector is increased; the elongation thereof is decreased, but its strength is significantly improved. In Preparative Examples 1 to 9, the outer layer of Fe is provided with a Ni layer, a Mo layer, or a Cr layer, which can protect the Fe layer from corrosion.

### II. Application Example

### 1. Preparation of lithium-ion battery

### Application Example 1

### 1) Preparation of positive electrode plate

The nickel-cobalt-manganese (NCM) ternary material, the conductive agent carbon black, and the binder polyvinylidene difluoride (PVDF) described above were added to N-methylpyrrolidone in a mass ratio of 97:1:2, and the mixture was stirred for 0.5 h to 6 h to obtain a positive electrode slurry. The positive electrode current collector was then evenly coated with the positive electrode slurry, followed by drying, cold pressing, and cutting to obtain the positive electrode plate.

### 2) Preparation of negative electrode plate

The active material artificial graphite, a silicon-based material as the active material, the conductive agents carbon black and carbon nanotubes (CNT), the binder styrene-butadiene rubber (SBR), and the thickener sodium hydroxymethylcellulose (CMC) were added to deionized water in a weight ratio of 47.25:47.25:1:0.375:2.8:1.325, and the mixture was stirred for 0.5 h to 6 h to obtain a negative electrode slurry, where the silicon-based material in the active material of the negative electrode slurry accounted for 50%. The negative electrode current collector of Preparative Example 1 was coated with the negative electrode slurry and dried.

### 3) Separator

A polypropylene film was used as the separator.

### 4) Electrolytic solution

LiPF₆ was dissolved in a mixed solvent of ethylene carbonate, ethyl methyl carbonate, and diethyl carbonate at a volume ratio of 1:1:1 to prepare an electrolytic solution having the LiPF₆ concentration of 1 mol/L.

### 5) Preparation of lithium-ion battery

The positive electrode plate, the separator, and the negative electrode plate were wound in sequence to obtain a bare cell. The bare cell was placed in a packaging shell. After drying, the electrolytic solution was injected. A lithium-ion battery was obtained after vacuum packaging, standing, formation, shaping, and other procedures.

### Application Example 2

This application example is substantially the same as Application Example 1, except that in this example, the silicon-based material in the active material of the negative electrode slurry accounts for 60%, and the total weight of the active material in the negative electrode slurry is the same.

### Application Example 3

This application example is substantially the same as Application Example 1, except that in this example, the silicon-based material in the active material of the negative electrode slurry accounts for 80%, and the total weight of the active material in the negative electrode slurry is the same.

### Application Example 4

This application example is substantially the same as Application Example 1, except that in this example, the silicon-based material in the active material of the negative electrode slurry accounts for 100%, and the total weight of the active material in the negative electrode slurry is the same.

### Application Example 5

This application example is substantially the same as Application Example 1, except that the negative electrode current collector in the negative electrode plate adopts the current collector of Preparative Example 4.

### Application Example 6

This application example is substantially the same as Application Example 1, except that the negative electrode current collector in the negative electrode plate adopts the current collector of Preparative Example 8.

### Application Example 7

This application example is substantially the same as Application Example 1, except that the negative electrode current collector in the negative electrode plate adopts the current collector of Preparative Example 8.

### Comparative Application Example 1

This comparative application example is substantially the same as Application Example 1, except that the negative electrode current collector in the negative electrode plate adopts the current collector of Preparative Comparative Example 1.

### Comparative Application Example 2

This comparative application example is substantially the same as Application Example 1, except that the negative electrode current collector in the negative electrode plate adopts the current collector of Application Comparative Example 1, the silicon-based material in the active material of the negative electrode slurry accounts for 100%, and the total weight of the active material in the negative electrode slurry is the same.

### Comparative Application Example 3

This comparative application example is substantially the same as Application Example 1, except that the negative electrode current collector in the negative electrode plate adopts the current collector of Preparative Comparative Example 2.

### 2. Battery performance test

### 1) Dissolution concentration of Fe

The battery cell was allowed to stand at 25 °C for 2 h, and after being discharged at a constant current of 0.1C to 2.0V, the cell was dissembled. The negative electrode was soaked in the DMC solvent for 24 h, and the content of Fe in the DMC solvent in which the negative electrode plate was soaked was tested.

### 2) Energy density

2.1) The method for measuring the discharge energy of the battery cell was as follows:
   The battery cell was allowed to stand at 25 °C for 2 h to ensure that the temperature of the battery cell was 25 °C;
   at 25 °C, the battery cell was charged at 0.1C to a charge cut-off voltage, and constant-voltage charging was continued at the charge cut-off voltage until the current reached 0.05C, at which point charging was terminated (where C represents the rated capacity of the battery cell);
   the battery cell was allowed to stand at 25 °C for 1 h; and
   at 25 °C, the battery cell was discharged at 0.1C to a discharge cut-off voltage, and the total discharge capacity and total discharge energy of the battery cell were recorded as C0 and E0, respectively;
2.2) Battery cell weight measurement: The battery cell was placed on an electronic balance until the weight stabilized, and the battery cell weight was recorded as M0;
2.3) Energy density calculation: The energy density of the battery cell was calculated as: battery cell discharge energy E0/battery cell weight M0.

### 3) Corner breakage ratio of electrode plate

The number of negative electrode corners (creases) of the cell in the production process was recorded as N0.
3.1) A fresh cell and the cell after cycles were both fully charged at a current of 0.1C to a charge cut-off voltage, and then constant-voltage charging was continued at the charge cut-off voltage until the current reached 0.05C, at which point charging was terminated;
3.2) The fully-charged cell was dissembled, and then the number of corner breakages of the positive electrode in the cell was recorded. The number of corner breakages of the fresh cell was recorded as N1, and the number of corner breakages of the cell after cycles was recorded as N2;
3.3) The corner breakage ratio of the electrode plate of the fresh cell was N1/N0, and the corner breakage ratio of the electrode plate of the cell after cycles was N2/N0.

### 4) Cycle test process

The voltage calibration method is as follows:
4.1) The battery cell was allowed to stand at 25 °C for 2 h to ensure that the temperature of the battery cell was 25 °C;
4.2) At 25 °C, the battery cell was charged at 0.33C0 to 4.25V, and then charged to a current of 0.05C0 at a constant voltage of 4.25V;
4.3) The battery cell was allowed to stand for 1 h;
4.4) At 25 °C, the battery cell was discharged to 0.95C0 at 0.33C0, at which point the voltage was recorded as V1;
4.5) The battery cell was allowed to stand for 5 min;
4.6) At 25 °C, the battery cell was discharged to 2.0V at 0.33C0;
4.7) The battery cell was allowed to stand for 5 min;
4.8) At 25 °C, the battery cell was charged to 0.97C0 at 0.33C0, at which point the voltage was recorded as V2;
4.9) The battery cell was allowed to stand for 2 h.

The process for cycle test was as follows:
4.10) The battery cell was allowed to stand at 25 °C for 2 h to ensure that the temperature of the battery cell was 25 °C;
4.11) At 25 °C, the battery cell was charged to a voltage of V2 at 0.33C0;
4.12) The battery cell was allowed to stand for 0.5 h;
4.13) At 25 °C, the battery cell was discharged to a voltage of V1 at 0.33C0, at which point the capacity was recorded as Cn;
4.14) The battery cell was allowed to stand for 0.5 h;
4.15) The steps of 4.11 to 4.14 were repeated until the number of cycles was 100 cls.

The lithium-ion batteries of the application examples and the application comparative examples are subjected to Fe dissolution concentration test, energy density test, corner breakage ratio test of an electrode plate, and cycle test by using the above test methods, and test data are shown in Table 2.

**Table 2**

| Experimental plan | Negative electrode current collector | Content of silicon-based material of negative electrode | Energy density (Wh/kg) | Corner breakage ratio of negative electrode plate | | Dissolution concentration of Fe (ppm) | |
|---|---|---|---|---|---|---|---|
| | | | | Fresh cell | 100cls | Fresh cell | 100cls |
| Application Example 1 | Preparative Example 1 | 50% | 406.4 | 0.0% | 0.0% | 45 | 80 |
| Application Example 2 | Preparative Example 1 | 60% | 415.8 | 0.0% | 0.0% | 48 | 88 |
| Application Example 3 | Preparative Example 1 | 80% | 429.5 | 0.0% | 3.6% | 52 | 92 |
| Application Example 4 | Preparative Example 1 | 100% | 437.2 | 0.0% | 10.0% | 60 | 95 |
| Application Example 5 | Preparative Example 4 | 50% | 406.4 | 0.0% | 0.0% | 33 | 45 |
| Application Example 6 | Preparative Example 8 | 50% | 400.4 | 0.0% | 0.0% | 25 | 38 |
| Application Example 7 | Preparative Example 8 | 50% | 399.4 | 0.0% | 0.0% | 20 | 30 |
| Comparative Application Example 1 | Preparative Comparative Example 1 | 50% | 400.95 | 37.5% | 58.3% | / | / |
| Comparative Application Example 2 | Preparative Comparative Example 1 | 100% | 430.85 | 53.3% | 80.0% | / | / |
| Comparative Application Example 3 | Preparative Comparative Example 2 | 50% | 406.4 | 0.0% | 0.0% | 150 | 210 |

From Table 2, it can be seen that by comparing Application Comparative Examples 1 and 3, when the Ni-Fe alloy foil is applied to a battery system with high silicon content as a negative electrode current collector (such as Application Comparative Example 3), the energy density of the battery is significantly improved compared with the case that a copper foil is used as the negative electrode current collector (such as Application Comparative Example 1). In addition, the breakage of the electrode plate is also significantly reduced, but there is a risk of dissolution of Fe. The higher the content of the silicon-based material of the negative electrode in the applied battery system, the more serious the breakage is.

In Application Example 1, under the condition that the content of the silicon-based material of the negative electrode is 50%, breakage does not occur on the electrode plate of the negative electrode, and the breakage ratio of the electrode plate is significantly reduced compared with that of a copper foil. In addition, since the Ni element is on the surface of the negative electrode current collector to prevent the corrosion of the Fe element, the dissolution of the Fe element is significantly reduced compared with that of Application Comparative Example 3, such that the service life of the secondary battery can be prolonged.

In Application Examples 1 to 4, as the content of the silicon-based material of the negative electrode increases, the energy density of the battery gradually increases. The breakage ratio of the negative electrode plate after cycles is increased, but significantly lower than that of the common copper foil. As the content of the silicon-based material of the negative electrode increases, the dissolution concentration of Fe is improved, but the dissolution of Fe is significantly lower than that of Fe in a uniform Ni-Fe alloy foil. This indicates that the negative electrode current collector of the present application has a lower breakage ratio and lower dissolution of Fe in the high-silicon negative electrode secondary battery and can prolong the service life of the secondary battery.

In Application Example 4, under the condition that the content of the silicon-based material of the negative electrode is 100%, the breakage ratio of the negative electrode plate is higher than that of the case that the content of the silicon-based material of the negative electrode is 50%, but the ratio is still reduced compared with that of the common copper foil. In addition, due to repeated contraction and expansion of silicon under the system in which the content of the silicon-based material of the negative electrode is 100%, the dissolution of Fe is higher than that of the case that the content of the silicon-based material of the negative electrode is 50%, but the dissolution is still significantly reduced compared with that of the uniform Ni-Fe alloy foil.

In Application Examples 6 and 7, the current collectors with Ni layers and Fe layers in a gradient thickness are used. Compared with Application Example 1, the batteries of Application Examples 6 and 7 have a better corrosion-resistance effect under the same content of the silicon-based material of the negative electrode, the corner breakage of the electrode plate does not occur, and the dissolution of Fe is further reduced, such that the service life of the secondary battery can be further improved.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A current collector, comprising a substrate layer, a first metal layer, and a second metal layer, wherein the first metal layer is disposed on at least one surface of the substrate layer, the second metal layer is disposed on a surface of the first metal layer facing away from the substrate layer, and the first metal layer comprises elemental iron or an iron alloy; the second metal layer comprises at least one of a metal layer formed by any one of copper, tin, lead, molybdenum, chromium, and nickel, an elemental metal stacking layer formed by any two or more of the elements, and an alloy layer formed by any two or more of the elements.

2. The current collector according to claim 1, wherein a plurality of the first metal layers and a plurality of the second metal layers are alternately disposed on a same side surface of the substrate layer, and an outermost layer of the current collector is the second metal layer.

3. The current collector according to claim 2, wherein thicknesses of the plurality of first metal layers on the same side surface of the substrate layer are equal or sequentially decrease in a direction from the substrate layer toward the outermost layer.

4. The current collector according to claim 2 or 3, wherein the thicknesses of the plurality of first metal layers on the same side surface of the substrate layer sequentially decrease in the direction from the substrate layer toward the outermost layer, and a difference in thicknesses of two adjacent first metal layers is 0.5 µm to 1.0 µm.

5. The current collector according to any one of claims 2 to 4, wherein thicknesses of the plurality of second metal layers on the same side surface of the substrate layer are equal or sequentially increase in the direction from the substrate layer toward the outermost layer.

6. The current collector according to any one of claims 2 to 5, wherein the thicknesses of the plurality of second metal layers on the same side surface of the substrate layer sequentially increase in the direction from the substrate layer toward the outermost layer, and a difference in thicknesses of two adjacent second metal layers is 0.5 µm to 1.0 µm.

7. The current collector according to any one of claims 1 to 6, wherein the substrate layer comprises elemental iron or an iron alloy.

8. The current collector according to any one of claims 1 to 7, wherein the substrate layer is made of a same material as the first metal layer, and the substrate layer is made of a different material from the second metal layer.

9. The current collector according to any one of claims 1 to 8, wherein the current collector satisfies at least one of the following (1) to (3):
(1) the substrate layer is an iron metal layer;
(2) the first metal layer is an iron metal layer; and
(3) the second metal layer is a nickel metal layer.

10. The current collector according to any one of claims 1 to 9, wherein a thickness of the substrate layer is 2 µm to 6 µm;
optionally, the thickness of the substrate layer is 2 µm to 4 µm.

11. The current collector according to any one of claims 1 to 10, wherein a thickness of the current collector is 4 µm to 20 µm;
optionally, the thickness of the current collector is 6 µm to 9 µm.

12. The current collector according to any one of claims 1 to 11, wherein the thickness of the first metal layer is 0.5 µm to 16 µm;
optionally, the thickness of the first metal layer is 0.5 µm to 1.5 µm.

13. The current collector according to any one of claims 1 to 12, wherein the thickness of the second metal layer is 0.5 µm to 16 µm;
optionally, the thickness of the second metal layer is 0.5 µm to 1.5 µm.

14. A method for preparing a current collector, comprising the following steps:
providing a substrate layer;
forming a first metal layer on a surface of the substrate layer; and
forming a second metal layer on a surface of the first metal layer facing away from the substrate layer;
wherein the first metal layer comprises elemental iron or an iron alloy, and the second metal layer comprises at least one of a metal layer formed by any one of copper, tin, lead, molybdenum, chromium, and nickel, an elemental metal stacking layer formed by two or more of the elements, and an alloy layer formed by two or more of the elements.

15. A secondary battery, comprising a negative electrode plate, wherein the negative electrode plate comprises a negative electrode current collector, and the negative electrode current collector comprises the current collector according to any one of claims 1 to 13.

16. The secondary battery according to claim 15, wherein a negative electrode active material is disposed on the negative electrode current collector, the negative electrode active material comprises a silicon-based material, and a mass fraction of the silicon-based material in the negative electrode active material is 25% to 100%.

17. An electric device, comprising the secondary battery according to claim 15 or 16.
